# EUROPEAN PATENT APPLICATION

(11) **EP 1 741 567 A1**
(43) Date of publication of application: **10.01.2007**
(21) Application number: 05010732.5
(22) Date of filing: 18.05.2005
(51) Int. Cl.: B44C 1/17, B60R 13/02, B60R 13/08

(54) **Colour printed lining for vehicles**

(71) Applicant: Rieter Technologies AG, 8406 Winterthur (CH)
(72) Inventor: Boutera, Karim Rieter Automotive France S.A., 78410 Aubergenville (FR)
(74) Representative: Alder, Hans Rudi

(57) **Abstract**

The method of manufacturing an interior vehicle component uses a paper or film (5), which is pre-printed with sublimable dyes (7). This paper or film (5) is arranged on top of a face fabric (3), which face fabric (3) is arranged of a structural component (2) in order to form an assembly (1). In a first step this assembly is heated between two flat plates under pressure during a given transfer time in order to transfer the image from the paper or film (5) to the face fabric (3). Then the paper or film (5) is removed from the face fabric (3). In a second step the remaining assembly is moulded in a cold moulding tool to give the final shape and visual aspect to the interior vehicle component. The vehicle component according to the invention exhibits an airflow resistance of 250 - 3'000 Nms⁻³.

## Description

Present invention is concerned with a method of manufacturing an interior vehicle component featuring a decorative colour printed surface according to the preamble of claim 1 and an interior vehicle component manufactured according to this method.

It is well known in the art of manufacturing interior vehicle components to create panels, such as instrument panels, door panels, centre consoles or other interior covers comprising a textured surface with pleasing tactile properties. Such vehicle components are manufactured by heating up a first plastics material (preferably a thermoplastic olefin or vinyl), which is then introduced into a mould cavity together with a second plastics material (preferably a thermoset material or polypropylene). During the moulding process the first material is pressed against a textured cavity surface of the mould, such that an imprint of the textured surface is transferred to this first material. This textured surface may comprise an irregular or regular, non-smooth surface, such as a random grainy pattem, a leather grain pattem, a dimpled pattern or just a logo, letters and/or numerals. Such a method is disclosed and described in more details in publication US-2005/0017404.

Recently, consumers have been demanding a more aesthetically pleasing surface, in particular colour printed panels. A method to transfer printings on articles having flat, curved or irregularly shaped surfaces is disclosed in GB-2'117'320. With this method a pattern of sublimable dyestuff is applied to a solid article, i.e. a structural part, such as a motor vehicle's door panel, carrying a coating of polymeric material. In particular, a transfer sheet being pre-printed with a sublimable dye is positioned on the panel to be printed, before heat is applied to cause migration of the dye into the polymer coating. Unfortunately the disclosed method requires an expensive tooling and is not suitable for inner linings with enhanced acoustic performance.

JP-10128779 discloses a method for manufacturing a decorative door trim, which method uses a transfer sheet, which is provided with a decorative colour painting to be applied to the surface of a skin material. The heat sublimable colouring agent constituting the decorative painting is transferred by heat to the skin material during the moulding process. For that purpose the transfer sheet carrying a desired coloured design or an image is inserted into the lower mould whereby its coloured design surface is facing the upper mould. After the skin material has been placed onto the transfer sheet, the upper mould holding a base material is clamped to the lower mould under a pre-determined pressure. Thereby the base material is shaped and moulded, while at the same time the skin material is integrally bound to this moulded base material. Since the moulds are heated up to a predetermined temperature for this moulding process the heat sublimable colouring agent of the transfer sheet is transferred to the skin material. After this shaping and printing step the mould is opened and the transfer sheet is removed from the skin material. Unfortunately the correct placement and positioning of the transferred image is difficult to control, since the transfer sheet has to be placed on a shaped surface of the mould and is displaced during closure of the mould. Although the transfer sheet preferably consists of a plastics foil, it is unavoidably stretched, teared apart and/or wrinkled in shaped areas, in particular in corner or indentation areas, leading to defects in colour, image distortions or damages. Furthermore the separation of the transfer sheet from the formed skin material is difficult to handle. The described method needs expensive moulding tools, which have to be heated-up and cooled-down under pressure.

It is also known from DE-41'26'096 or GB-2'333'998 to decorate non-synthetic articles, in particular woven and non-woven products comprising natural fibres, by a sublistatic process. These products, in particular cloths, maintain its permeability to air and steam, but have additionally to be treated with a suitable lacquer before the colour transfer process. There are no automotive interior parts known at the moment, which are foreseen with a colour aesthetic design on their surface and comprising a predetermined acoustic performance.

All known methods are only suitable for mainly flat areas and only work with hot moulding tools, i.e. are not usable for open pored thermoplastic materials (KEST), in particular for thermoplastic felt.

Therefore it is the aim of present invention to achieve an acoustically effective automotive interior part comprising a colour printed face fabric. In particular, present invention aims to manufacture an inner lining for vehicles exhibiting a predetermined, acoustically relevant air flow resistance and featuring an accurately positioned and defect-free colour printed image, preferably a holohedral colour printed image.

This problem is solved by a method comprising the features of claim 1 and by an interior vehicle component, in particular an inner lining, manufactured according to this method.

The method according with the invention allows manufacturing an interior vehicle component featuring a defect-free, in particular wrinkle-free, decorative colour printed surface and shows an acoustically relevant airflow-resistance of 250 to 3'000 Nms⁻³. To achieve such a vehicle component a paper or film being pre-printed with sublimable dyes is applied with its coloured surface to an open pored face fabric, which is arranged on top of a structural component.

This face fabric comprises preferably a white or light coloured, non-woven fabric, or a stitched fabric, a knitted fabric or a woven fabric and comprises at least 65% of polyester based material. The structural component comprises a thermoplastic felt, or a thermoplastic non-woven, or any thermoplastic-based material, such as GMT. Of course other suitable materials may be used, i.e. foam. This assembly is in a first step heated up between two flat plates under pressure during a given transfer time in order to transfer the image of the pre-printed paper or film distortion-free to the face fabric, before the paper or film is removed from the assembly. In a second step the remaining assembly with the transferred image is moulded in a cold moulding tool to give the remaining assembly the final shape and at the same time a defect-free, in particular a wrinkle-free, visual aspect. At the same time a final, acoustically relevant airflow-resistance is achieved. The acoustically relevant parameters for determining the airflow resistance of interior vehicle lining parts are defined in ISO 9053.

The interior vehicle component manufactured in accordance with this method comprises a defect-free, in particular wrinkle-free, image. It further comprises a predetermined airflow resistance.

The advantages of present method are clearly apparent for the man skilled in the art. The use of a preliminary colour printing process and a subsequent cold moulding process allows an accurate, defect-free and holohedral transfer of the image, and in particular a wrinkle-free manufacturing of interior vehicle components, i.e. lining parts, as well as a cost saving production, while keeping effective the predetermined acoustical absorption properties of the lining part Furthermore this method to produce printed parts proves to be a very ecological one, i.e. no solvents, no wastage of water or any chemicals are necessary.

The invention will become more apparent from the following detailed specification and drawing:

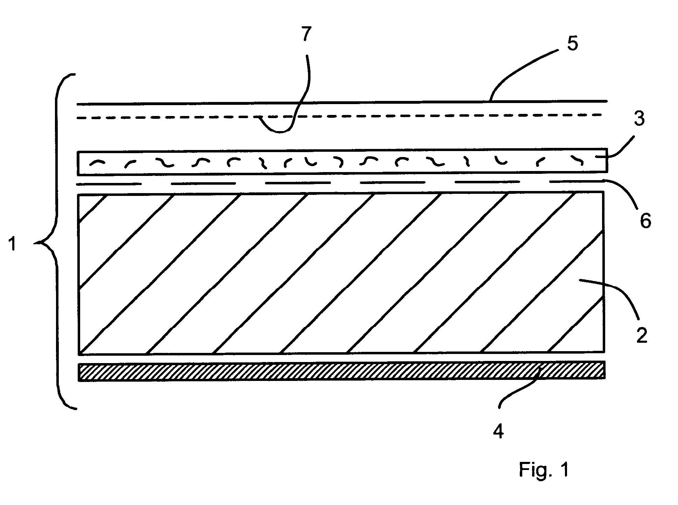

### Figure 1: schematic view of an assembly for manufacturing an interior vehicle component in accordance with the invention.

As shown in figure 1 the assembly for manufacturing a vehicle component according to the invention comprises a structural component 2 consisting of a thermoplastic felt, preferably consisting of a 300 to 2'000 g/m² polyester-based material (known as KEST or KIT material). On top of this structural component 2 there is arranged a face fabric 3 which preferably consists of 150 g/m² to 200 g/m² 100% PET material or PET/CoPET material (known as NT Tharreau or mali blanc materials). This face fabric 3 is bonded to the structural component 2 by a thermoplastic binder 6, in particular by a foil or powder consisting of PE or CoPA or CoPES. Affixed to the structural component 2 may be a stiffening and/or strengthening layer 4, which consists of a bulk fibres material.

In a first method step a paper or film 5 carrying a pre-printed decorative image with sublimable dyes 7 is applied to the air-permeable face fabric 3 to form the assembly 1 for manufacturing a vehicle component according to the invention. This assembly 1 is then heated between two flat plates under pressure during a given transfer time. The pressure may vary between 0.1 and 6 bar, and is preferably 4 bar, while the temperature may be chosen between 180° C and 225° C, preferably 200° C. Since the colour image transfer is carried out between two flat plates, the transferred image stays defect-free, i.e. no image distortions, no colouring defects or wrinkles are occurring. The necessary time needed to transfer the sublimable dyes 7 from the paper or film 5 to the face fabric 3 is well known to the man skilled in the art and ranges about 15 to 60sec.

After having transferred the sublimable dyes 7 to the face fabric 3, the paper or foil 5 is removed from the assembly 1, leaving the sublimable dyes 7 affixed to the face fabric 3. In a second method step the remaining assembly is moulded in a cold moulding tool to give the final shape and a pre-determined airflow-resistance to the interior vehicle component. The acoustically effective airflow-resistance ranges between 250 and 3'000 Nms⁻³.

Compared with the existing technology of transfer dying of vehicle components the main improvement is to be seen in the use of a cold moulding process, allowing an accurate and defect-free colour printing, while keeping effective the predetermined acoustic absorption properties of the lining part. Furthermore this method is a cost saving production and a very ecological way to produce printed lining parts, i.e. no solvents, no wastage of water or any chemicals are necessary.

Of course any suitable materials, such as open pored foams, may be used to manufacture interior vehicle components featuring a decorative surface according to the invention. The transferred image may be any design, a photgraphic or artistic image, or an image giving the impression of wood or any other material, as leather or metallic strips.

This method even allows manufacturing interior vehicle components with a distortion-free image. This may be achieved by a simple pre-compensation of the original image, which pre-compensation compensates the distortion of the image generated by the specific shaping process of the component during the cold moulding phase. This could be achieved by use of an optical distortion of the image on the pre-printed paper or film in predetermined regions.

## Claims

1. Method of manufacturing an interior vehicle component, in particular an inner lining, featuring a decorative colour printed surface, which method comprises a sublistatic printing process, **characterized in that** a paper or film (5) carrying a pre-printed decorative image with sublimable dyes (7) is applied to an air-permeable face fabric (3), which face fabric (3) is arranged on top of a structural component (2), whereby in a first step this assembly (1) is heated between two flat plates under pressure during a given transfer time, thereby transferring the decorative image defect-free to the face fabric (3), before the paper or film (5) is removed from the face fabric (3), and in a second step the remaining assembly is moulded in a cold moulding tool to give a final shape and a defect-free visual aspect to the interior vehicle component.

2. Method in accordance with claim 1, **characterised in that** the face fabric (3) comprises preferably a white or light coloured, nonwoven fabric, a stitch fabric, a knitted fabric or a woven fabric and comprises at least 65% of polyester based material.

3. Method in accordance with claim 1, **characterised in that** the structural component (2) comprises a thermoplastic felt, or a thermoplastic nonwoven, or any thermoplastic-based material, such as GMT.

4. Method in accordance with claim 1, **characterised in that** the pressure during the first step is between 0,1 and 6 bar, preferably 4 bar.

5. Method in accordance with claim 1, **characterised in that** the transfer time during the first step is between 25 and 200 sec., preferably 40 sec.

6. Method in accordance with claim 1, **characterised in that** the temperature during the first step is more than 180° Celsius, preferably 200°C.

7. Method in accordance with claim 1, **characterized in that** during the second step a final airflow resistance of 250 - 3000 Nms⁻³, preferably of 1800 Nms⁻³ is given to the interior vehicle component.

8. Interior vehicle component, in particular an inner lining, manufactured in accordance with claim 1.

9. Interior vehicle component in accordance with claim 8, **characterised in that** it comprises a defect-free colour printed image.

10. Interior vehicle component in accordance with claim 9, **characterised in that** it exhibits an airflow resistance of 250 - 3000 Nms⁻³, preferably of 1800 Nms⁻³.
